# FASCICULE DE BREVET EUROPEEN

(11) **EP 1 537 336 B1**
(45) Date de publication et mention de la délivrance du brevet: **27.10.2010**
(21) Numéro de dépôt: 03758280.6
(22) Date de dépôt: 27.08.2003
(51) Int. Cl.: F04D 29/60

(54) **DISPOSITIF DE FIXATION DE POMPE A VIDE**
BEFESTIGUNGSANLAGE FÜR VAKUUMPUMPE
DEVICE FOR FIXING A VACUUM PUMP

(30) Priorité: 29.08.2002 FR 0210713
(43) Date de publication de la demande: 08.06.2005
(73) Titulaire: Alcatel Lucent, 75008 Paris (FR)
(72) Inventeur: MATHES, Rainer, F-74160 Saint Julien en Genevois (FR); DAUVILLIER, Olivier, F-74150 Marcellaz Albanais (FR); DULAC, Eric, F-7400 Annecy (FR); BOUILLE, André, F-74000 Annecy (FR); SAVRY, Christian, F-74000 Annecy (FR)
(74) Mandataire: Sciaux, Edmond
(86) Numéro de dépôt international: PCT/FR2003/002586
(87) Numéro de publication internationale: WO 2004/020839

(56) Documents cités:
- PATENT ABSTRACTS OF JAPAN vol. 1996, no. 09, 30 septembre 1996 (1996-09-30) & JP 08 114196 A (MITSUBISHI HEAVY IND LTD), 7 mai 1996 (1996-05-07)

## Description

### ROMAINE TECHNIQUE DE L'INVENTION

La présente invention concerne les pompes à vide à rotation rapide que l'on solidarise et raccorde à une structure fixe telle qu'une canalisation ou une enceinte à vide pour générer un vide poussé.

En particulier l'invention concerne un dispositif de fixation d'une pompe à vide comme défini dans le préambule de la revendication 1. Un tel dispositif est connu du document JP-A-08 114 196.

Dans l'industrie des composants électroniques ou micromécaniques, on utilise des procédés d'usinage ou de traitement par plasma exécutés dans une enceinte où l'on doit maintenir une atmosphère de vide contrôlé.

La génération du vide nécessite l'utilisation de pompes capables de générer rapidement et de maintenir un vide poussé adapté au procédé d'usinage ou de traitement. On utilise généralement des pompes de type turbomoléculaire, composées d'un corps de pompe dans lequel un rotor est entraîné en rotation rapide, par exemple une rotation à plus de trente mille tours par minute.

Avec une telle vitesse de rotation élevée, le rotor acquiert une énergie cinétique très élevée.

Le corps de pompe comporte un orifice d'aspiration coaxial, que l'on raccorde à un orifice de sortie de la structure fixe telle que la canalisation ou l'enceinte à vide. En général, la pompe est solidarisée à la seule structure fixe telle que la canalisation ou l'enceinte à vide, et son support s'effectue par la seule zone entourant l'orifice d'aspiration de pompe et l'orifice correspondant de structure fixe. Ainsi, le corps de pompe comporte une bride annulaire coaxiale entourant l'orifice d'aspiration, des trous taraudés sont prévus sur la paroi de structure fixe autour de l'orifice de sortie, des trous traversants sont prévus sur la bride annulaire coaxiale du corps de pompe, et des vis à tête sont adaptées de façon que leurs tiges traversent les trous traversants et se vissent dans les trous taraudés associés de la structure fixe pour solidariser la pompe à vide à la structure fixe en plaquant la bride contre la paroi de structure fixe.

De façon traditionnelle, les tiges des vis sont cylindriques de révolution, avec un tronçon lisse qui traverse un trou traversant de diamètre légèrement supérieur au diamètre de la tige, et avec un tronçon d'extrémité fileté qui se visse dans un trou taraudé associé.

Les normes prévoient les dimensions respectives de la bride, des vis, et des trous nécessaires, ainsi que le nombre de vis et trous, en fonction des diamètres de pompes.

Ainsi, pour une pompe turbomoléculaire de type ATHM de la société ALCATEL, on fixe la pompe en prévoyant une bride de type DN 250 iso-F, avec douze vis de type M10 dont la tige a une longueur de trente millimètres environ pour un diamètre de dix millimètres, et les trous de bride et de structure fixe ont un diamètre nominal de onze millimètres.

Une telle structure de fixation donne toute satisfaction dans les conditions normales d'utilisation, et permet ainsi de supporter les efforts mécaniques générés par le fonctionnement de la pompe à vide lors d'une utilisation normale.

Par contre, on a pu constater qu'une difficulté insurmontable peut survenir en cas de destruction accidentelle du rotor de pompe lors d'une rotation à pleine vitesse. En effet, dans une telle hypothèse, le rotor lancé à pleine vitesse de rotation se trouve alors déséquilibré, peut venir frapper violemment la paroi du corps de pompe en lui imprimant une force de déplacement transversale ou radiale, et peut frotter fortement sur la paroi du corps de pompe en lui imprimant un couple de rotation coaxial. Du fait de la grande énergie accumulée dans le rotor en rotation rapide, les contraintes mécaniques appliquées par le rotor sur le corps de pompe sont très élevées et multidirectionnelles, et ces contraintes sont transmises au dispositif de fixation de pompe à vide sur la structure fixe. Il en résulte des efforts violents de cisaillement multidirectionnels des vis de fixation, et l'on a pu constater que dans les structures actuelles ces efforts conduisent à la rupture totale des vis. La pompe se trouve alors détachée de la structure fixe, et constitue un projectile dangereux qui peut parcourir le local d'utilisation.

L'abrégé de brevet japonais JP 08 114196 A enseigne de fixer une pompe turbomoléculaire par une bride ayant des trous de passage en regard de trous traversants d'une pièce fixe. Des vis de fixation traversent les trous de passage et les trous traversants pour recevoir des écrous de serrage. Les trous de passage comportent un tronçon oblong déporté latéralement, autorisant une flexion unidirectionnelle de la vis correspondante lors d'un couple de torsion axial anormal de produit. Cette disposition, qui n'agit que de façon unidirectionnelle et dans le cas d'un couple anormal, n'est pas conçue pour supporter les efforts multidirectionnels qui apparaissent lors d'une destruction accidentelle du rotor, et ne donne pas satisfaction dans ce cas.

### EXPOSE DE L'INVENTION

L'invention vise à concevoir une modification de la structure de fixation des pompes à vide qui, tout en restant compatible avec les normes en vigueur, augmente la capacité de retenue de la pompe à vide sur la structure fixe et évite la rupture des vis de fixation et le détachement de la pompe en cas d'éclatement du rotor lancé à pleine vitesse de rotation.

Pour cela, l'invention met à profit l'observation selon laquelle le risque de rupture des vis se trouve réduit lorsque les trous traversants de bride dans lesquels sont logés les vis autorisent une certaine déformation multidirectionnelle de flexion des tiges de vis.

Ainsi, pour atteindre ce but ainsi que d'autres, l'invention prévoit un dispositif de fixation de pompe à vide sur une paroi de structure fixe, dans lequel une bride annulaire coaxiale est prévue sur le corps de pompe à vide autour de l'orifice d'aspiration, des trous taraudés sont prévus sur la paroi de structure fixe, des trous traversants sont prévus sur la bride annulaire coaxiale, et des vis à tête sont adaptées de façon que leurs tiges traversent les trous traversants et se vissent dans les trous taraudés associés pour solidariser la pompe à vide à la structure fixe en plaquant la bride contre la paroi de structure fixe ; selon l'invention, les trous traversants comprennent un tronçon distal cylindrique de révolution suivi d'un tronçon proximal élargi coaxial de révolution adjacent à la paroi de structure fixe et autorisant, lors d'efforts de cisaillement en toute direction latérale dans la zone de liaison entre la pompe à vide et la structure fixe, une flexion de la tige de vis et un décalage latéral correspondant entre le trou traversant et le trou taraudé associé.

Selon un mode de réalisation préféré on prévoit que :
- le tronçon proximal de trou traversant a une forme telle que lors de la flexion de la tige de vis jusqu'à venir en butée contre la paroi latérale du tronçon proximal de trou traversant, le décalage latéral possible entre le trou traversant et le trou taraudé associé est supérieur au rayon de la tige de vis,
- le tronçon proximal de trou traversant a une longueur supérieure à la longueur du tronçon distal de trou traversant.

De la sorte, on assure une meilleure répartition de la déformation de la tige de vis, améliorant ainsi la tenue sans rupture.

En pratique, on peut avantageusement prévoir que le tronçon proximal de trou traversant comporte une portion proximale cylindrique de révolution se raccordant au tronçon distal de trou traversant par une portion distale tronconique de révolution.

Par exemple, la portion distale tronconique peut avoir un demi angle de cône égal à 60° environ, ce qui facilite la fabrication et notamment l'usinage du trou traversant.

Une amélioration de tenue à la rupture peut encore être obtenue en prévoyant que la tige de vis comprend, adjacent à la tête, un tronçon de tige lisse dont le diamètre est nettement inférieur au diamètre du tronçon distal de trou traversant, et qui est suivi jusqu'à une extrémité libre par un tronçon fileté conformé pour se visser dans le trou taraudé associé.

En pratique, on pourra avantageusement choisir que le diamètre de tronçon de tige lisse soit inférieur ou égal à 80% du diamètre du tronçon distal de trou traversant.

Dans le cas d'un tronçon de tige à diamètre nettement inférieur à celui du trou, on peut avantageusement prévoir que le tronçon proximal de trou traversant a une longueur supérieure ou égale à 1,5 fois la longueur du tronçon distal de trou traversant.

De préférence, une rondelle est interposée entre la tête de vis et la face externe adjacente de bride.

Une amélioration des propriétés de tenue mécanique est encore obtenue en prévoyant un matériau amortissant, de type élastomère, introduit dans l'espace entre la tige de vis et le trou traversant correspondant de bride. Un tel matériau dissipe sous forme de chaleur une partie de l'énergie provenant de la destruction du rotor, et soulage d'autant la tige de vis.

Selon un autre aspect, l'invention prévoit une pompe à vide munie d'une bride de fixation à trous traversants selon le dispositif tel que défini ci-dessus.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles:
- la figure 1 est une vue schématique illustrant, en coupe longitudinale, une structure de pompe turbomoléculaire et sa solidarisation à une structure fixe telle qu'une enceinte à vide ;
- la figure 2 est une vue agrandie du détail A de la figure 1, montrant la structure connue des moyens de fixation habituellement utilisés pour la tenue d'une pompe turbomoléculaire ;
- la figure 3 illustre les efforts de cisaillement appliqués à la structure de fixation de la figure 2 lors d'une destruction accidentelle du rotor lancé à pleine vitesse de rotation ;
- la figure 4 est une vue schématique en coupe d'une structure de fixation modifiée selon un mode de réalisation de la présente invention ; et
- la figure 5 est une vue de dessus de la pompe turbomoléculaire modifiée selon la présente invention, montrant la bride annulaire et les trous de fixation de forme modifiée.

### DESCRIPTION DES MODES DE REALISATION PREFERES

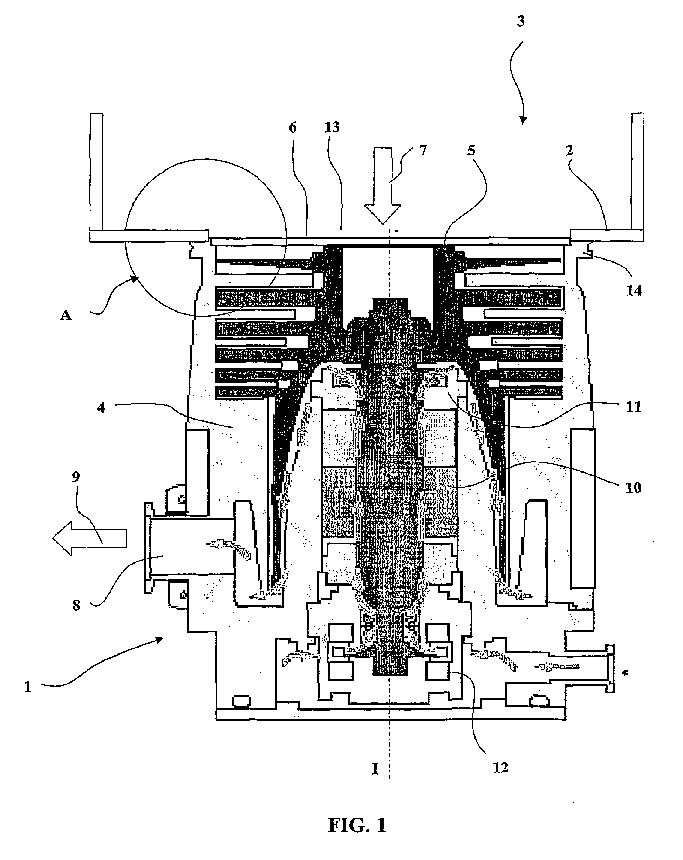

On considère tout d'abord la figure 1, illustrant une structure de pompe à vide 1 de type turbomoléculaire, solidarisée à la paroi 2 d'une structure fixe 3 telle qu'une enceinte à vide.

La pompe à vide 1 turbomoléculaire comprend un corps de pompe 4 dans lequel tourne à grande vitesse un rotor 5 en rotation axiale selon l'axe de rotation I. Le corps de pompe 4 comporte un orifice d'aspiration 6 coaxial, par lequel pénètrent les gaz pompés 7, et un orifice de rejet 8 par lequel sont évacués les gaz de sortie 9. Le rotor 5 est entraîné en rotation dans le corps de pompe 4 par un moteur interne 10, et est guidé latéralement par des paliers magnétiques ou mécaniques 11 et 12.

La paroi 2 de l'enceinte à vide 3 comprend un orifice de sortie 13, correspondant à l'orifice d'aspiration 6 de la pompe à vide 1, et constitue généralement une enceinte fermée isolée de l'extérieure et dans laquelle la pompe à vide 1 peut créer un vide contrôlé.

Une bride annulaire coaxiale 14 est prévue sur le corps de pompe à vide 4, autour de l'orifice d'aspiration 6, pour la fixation de la pompe à vide 1 à la paroi 2 de la structure fixe 3 constituée par l'enceinte à vide. Ainsi, la pompe à vide 1 est fixée à la paroi 2 de la structure fixe 3 telle que l'enceinte à vide en périphérie de l'orifice de sortie 13 et de l'orifice d'aspiration 6.

Conformément aux normes en vigueur, des trous taraudés sont prévus dans la paroi 2 de structure fixe 3, répartis autour de l'orifice de sortie 13, tandis que des trous traversants sont prévus sur la bride annulaire coaxiale 14, et des vis à tête sont adaptées de façon que leurs tiges traversent les trous traversants et se vissent dans les trous taraudés associés pour solidariser la pompe à vide 1 à la structure fixe 3 en plaquant la bride 14 contre la paroi 2 de structure fixe 3.

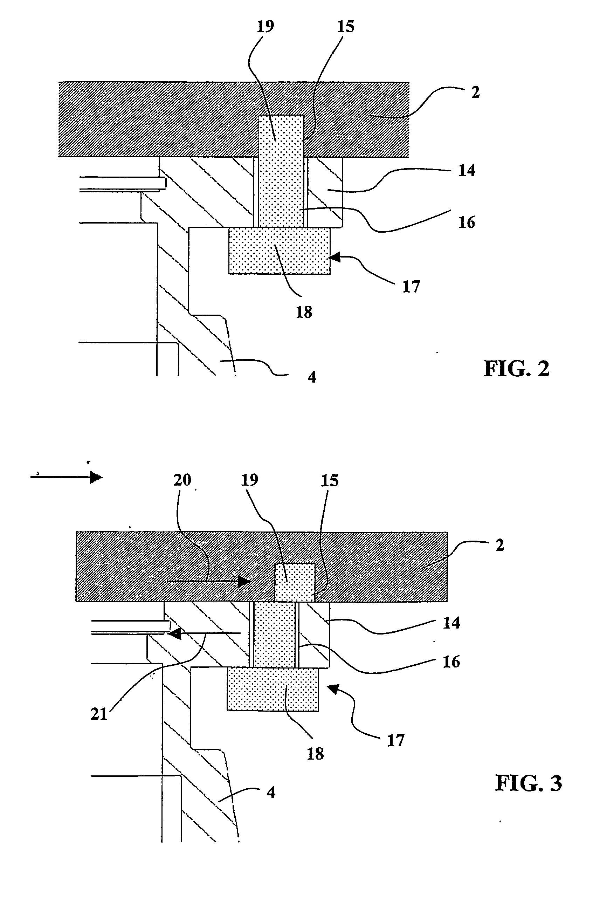

Les figures 2 et 3 illustrent un dispositif de fixation connu, conforme aux normes en vigueur. On retrouve ainsi, en vue partielle, la bride annulaire coaxiale 14 solidaire du corps de pompe 4, et la paroi 2 de la structure fixe avec un trou taraudé 15. La bride 14 comporte un trou traversant 16 cylindrique de révolution. Une vis 17, ayant une tête 18 et une tige 19, est adaptée pour que sa tige 19 traverse le trou traversant 16 de la bride 14 et se visse dans le trou taraudé 15 de la paroi 2. Le diamètre de la tige 19 de vis 17 est peu inférieur au diamètre du trou traversant 16 de la bride 14, en laissant seulement le jeu fonctionnel habituel d'environ 0,5 millimètres entre la tige 19 de vis 17 et la paroi du trou traversant 16.

Sur la figure 3, on retrouve les mêmes éléments, repérés par les mêmes références numériques. Lors d'une destruction du rotor lancé à pleine vitesse de rotation, l'énergie cinétique accumulée dans le rotor est transmise au corps de pompe 4, qui tend à se déplacer latéralement. Il en résulte sur la tige de vis 19 des contraintes de cisaillement illustrées par les flèches 20 et 21, contraintes qui provoquent la rupture de la tige 19 comme illustré sur la figure 3. L'invention vise à éviter une telle rupture, pour garantir que la pompe à vide 1 reste en permanence solidarisée à la paroi 2 de la structure fixe 3 même en cas de destruction du rotor lancé à pleine vitesse de rotation.

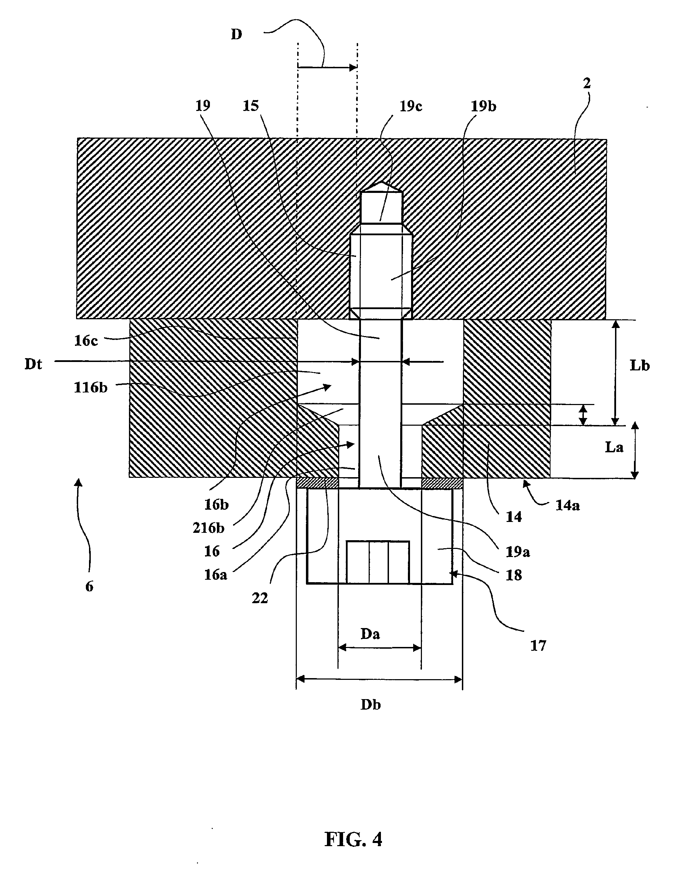

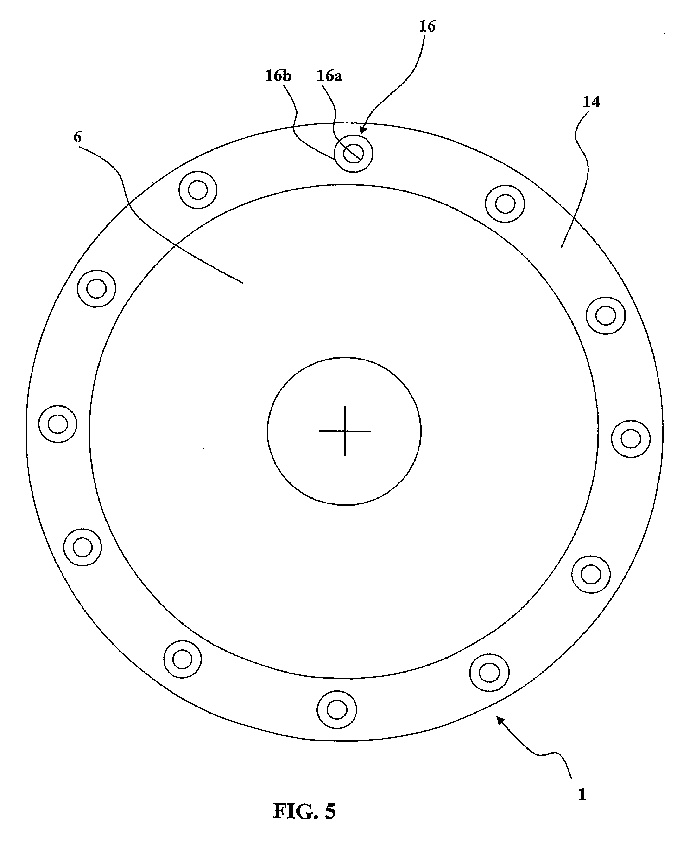

Les modifications prévues pour cela par la présente invention sont illustrées sur les figures 4 et 5, montrant un mode de réalisation particulièrement avantageux.

Dans un dispositif de fixation de pompe à vide selon l'invention, on retrouve la bride 14 du corps de pompe, de forme annulaire autour de l'orifice d'aspiration 6, et que l'on adapte contre la paroi 2 d'une structure fixe telle qu'une enceinte à vide. On retrouve également le trou traversant 16 de la bride 14, et le trou taraudé 15 de la paroi 2, ainsi que la vis 17 à tête 18 et tige 19.

Le trou traversant 16 comprend un tronçon distal 16a cylindrique de révolution, de diamètre Da, suivi d'un tronçon proximal 16b élargi coaxial de révolution, de diamètre Db plus grand que Da, adjacent à la paroi 2 de structure fixe. On comprend que lors d'une contrainte de cisaillement tendant à déplacer latéralement en toute direction le corps de pompe 4 par rapport à la paroi 2 de structure fixe, la présence du tronçon proximal 16b élargi autorise, dans la zone de liaison entre la pompe à vide 1 et la structure fixe 3, une flexion de la tige de vis 19 et un décalage latéral correspondant entre le trou traversant 16 et le trou taraudé 15 associé. Par cette flexion, on augmente sensiblement la tenue sans rupture de la vis 17, quelle que soit la direction latérale de l'effort à tenir.

On comprend que, lors d'une telle contrainte de cisaillement, le corps de pompe 4 peut se déplacer latéralement jusqu'à ce que la tige 19 de vis 17 vienne buter contre la paroi latérale du trou traversant 16 dans sa portion adjacente à la paroi 2 de structure fixe. Par exemple, lors d'un déplacement du corps de pompe 4 vers la droite sur la figure 4, la tige 19 de la vis 17 peut fléchir jusqu'à ce que la tige 19 vienne en appui sur la face gauche 16c de paroi latérale du trou traversant 16. Autrement dit, le corps de pompe 4 se déplace alors jusqu'à ce que la face gauche 16c du trou traversant 16 vienne au voisinage du trou taraudé 15 de la paroi 2. Ce déplacement est illustré par la flèche D sur la figure 4. Ce déplacement D est le décalage latéral possible entre le trou traversant 16 et le trou taraudé 15 associé.

On comprend que ce décalage latéral D possible dépend de la forme du tronçon proximal 16b du trou traversant 16.

De préférence, le tronçon proximal 16b a une forme telle que, lors de la flexion de la tige 19 de vis jusqu'à venir en butée contre la paroi latérale 16c du tronçon proximal 16b, le décalage latéral D soit supérieur au rayon de la tige 19 de vis (ou moitié de son diamètre Dt). Simultanément, le tronçon proximal 16b doit avantageusement avoir une longueur Lb supérieure à la longueur La du tronçon distal 16a. On assure ainsi une possibilité de déformation de la tige 19 de vis sur une grande longueur de la tige.

Dans la réalisation illustrée sur la figure 4, le tronçon proximal 16b comporte une portion proximale 116b de forme cylindrique de révolution de diamètre Db, qui se raccorde au tronçon distal 16a par une portion distale 216b de forme tronconique de révolution. La portion distale 216b tronconique a un demi angle de cône égal à 60° environ.

Pour augmenter encore la capacité de flexion de la tige 19 de vis on peut prévoir une vis ayant une forme particulière telle qu'illustrée schématiquement sur la figure 4. Dans ce cas, la tige 19 de vis comprend, adjacent à la tête 18, un tronçon de tige lisse 19a dont le diamètre Dt est nettement inférieur au diamètre Da du tronçon distal 16a de trou traversant 16. Le tronçon de tige lisse 19a se poursuit jusqu'à l'extrémité libre 19c de la tige 19 par un tronçon fileté 19b conformé pour se visser dans le trou taraudé 15 associé de la paroi 2. De préférence, le diamètre Dt de tronçon de tige lisse 19a est inférieur ou égal à 80% du diamètre Da du tronçon distal 16a de trou traversant 16. Un rapport des diamètres compris entre 70% et 80% peut convenir.

Également, le tronçon proximal 16b de trou traversant 16 a une longueur Lb supérieure ou égale à 1,5 fois la longueur La du tronçon distal 16a de trou traversant 16.

Une rondelle 22 peut être interposée entre la tête 18 de la vis 17 et la face externe adjacente 14a de la bride 14.

Dans le mode de réalisation illustré sur la figure 5, la bride 14 comprend douze trous traversants tels que le trou 16 ayant deux tronçons coaxiaux successifs 16a et 16b, régulièrement répartis sur la bride annulaire 14 autour de l'orifice d'aspiration 6 de la pompe à vide 1. Dans une pompe à vide 1 tenue par une bride 14 de type DN 250, selon les normes en vigueur, le nombre de trous traversants 16 correspond aux normes en vigueur.

Des essais ont montré qu'avec une pompe turbomoléculaire tenue par une telle bride normalisée à douze trous traversés par des vis comme illustré sur les figures 2 et 3, la destruction du rotor de la pompe à vide provoque la rupture par cisaillement des vis 17. Par contre, avec les modifications selon l'invention telles qu'illustrées sur la figure 4, les essais ont montré d'une part que douze vis engagées dans douze trous traversants 16 assurent la tenue de la pompe à vide sans rupture des vis lors d'une destruction du rotor. Et les mêmes essais effectués avec seulement neuf vis ont montré que les modifications selon l'invention assurent encore une tenue de la pompe sans rupture des neuf vis lors d'une destruction du rotor lancé à pleine vitesse de rotation.

On peut ainsi considérer que les modifications prévues selon l'invention permettent de garantir la tenue de la pompe à vide sur une structure fixe en cas de destruction du rotor lancé à pleine vitesse de rotation avec un coefficient de sécurité de 30% au moins.

On peut également améliorer le dispositif en insérant un matériau amortissant de type élastomère, dans l'espace entre la tige 19 de vis et le trou traversant 16 correspondant de bride 14.

Naturellement l'invention s'applique non seulement aux pompes à vide fixées par une bride DN 250 à douze vis, mais également à des pompes à vide de tailles différentes fixées par des brides normalisées différentes adaptées à leurs tailles.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de fixation d'une pompe à vide (1) sur une paroi (2) de structure fixe (3), dans lequel une bride annulaire coaxiale (14) est prévue sur le corps de pompe à vide (4) autour de l'orifice d'aspiration (6), des trous taraudés (15) sont prévus sur la paroi (2) de structure fixe (3), des trous traversants (16) sont prévus sur la bride annulaire coaxiale (14), et des vis (17) à tête (18) sont adaptées de façon que leurs tiges (19) traversent les trous traversants (16) et se vissent dans les trous taraudés (15) associés pour solidariser la pompe à vide (1) à la structure fixe (3) en plaquant la bride (14) contre la paroi (2) de structure fixe (3), **caractérisé en ce que** les trous traversants (16) comprennent un tronçon distal (16a) cylindrique de révolution suivi d'un tronçon proximal (16b) élargi coaxial de révolution adjacent à la paroi (2) de structure fixe et autorisant, lors d'efforts de cisaillement (20, 21) en toute direction latérale dans la zone de liaison entre la pompe à vide (1) et la structure fixe (3), une flexion de la tige (19) de vis et un décalage latéral (D) correspondant entre le trou traversant (16) et le trou taraudé (15) associé.

2. Dispositif selon la revendication 1 **caractérisé en ce que** le tronçon proximal (16b) de trou traversant (16) a une forme telle que lors de la flexion de la tige (19) de vis jusqu'à venir en butée contre la paroi latérale (16c) du tronçon proximal (16b) de trou traversant (16), le décalage latéral (D) possible entre le trou traversant (16) et le trou taraudé (15) associé est supérieur au rayon de la tige (19) de vis,
- le tronçon proximal (16b) de trou traversant (16) a une longueur (Lb) supérieure à la longueur (La) du tronçon distal (16a) de trou traversant (16).

3. Dispositif selon l'une des revendications 1 ou 2, **caractérisé en ce que** le tronçon proximal (16b) de trou traversant (16) comporte une portion proximale (116b) cylindrique de révolution se raccordant au tronçon distal (16a) de trou traversant (16) par une portion distale (216b) tronconique de révolution.

4. Dispositif selon la revendication 3, **caractérisé en ce que** la portion distale (216b) tronconique a un demi angle de cône égal à 60° environ.

5. Dispositif selon l'une quelconque des revendications 1 à 4, **caractérisé en ce que** la tige (19) de vis comprend, adjacent à la tête (18), un tronçon de tige lisse (19a) dont le diamètre (Dt) est nettement inférieur au diamètre (Da) du tronçon distal (16a) de trou traversant (16), et qui est suivi jusqu'à une extrémité libre (19c) par un tronçon fileté (19b) conformé pour se visser dans le trou taraudé (15) associé de la paroi (2).

6. Dispositif selon la revendication 5, **caractérisé en ce que** le diamètre (Dt) de tronçon de tige lisse (19a) est inférieur ou égal à 80% du diamètre (Da) du tronçon distal (16a) de trou traversant (16).

7. Dispositif selon l'une des revendications 5 ou 6, **caractérisé en ce que** le tronçon proximal (16b) de trou traversant (16) a une longueur (Lb) supérieure ou égale à 1,5 fois la longueur (La) du tronçon distal (16a) de trou traversant (16).

8. Dispositif selon l'une quelconque des revendications 1 à 7, **caractérisé en ce qu'**une rondelle (22) est interposée entre la tête (18) de la vis (17) et la face externe adjacente (14a) de la bride (14).

9. Dispositif selon l'une quelconque des revendications 1 à 8, **caractérisé en ce qu'**un matériau amortissant de type élastomère, est introduit dans l'espace entre la tige (19) de vis et le trou traversant (16) correspondant de bride (14).

10. Pompe à vide (1) munie d'une bride de fixation (14) à trous traversants (16) selon le dispositif des revendications 1 à 9.

## Claims

1. A device for fastening a vacuum pump (1) to a wall (2) of a fixed structure (3), wherein a coaxial ring-shaped flange (14) is included on the vacuum pump's body (4) around the intake orifice (6), threaded holes (15) are included on the wall (2) of the fixed structure (3), traversing holes (16) are included on the coaxial ring-shaped flange (14), and screws (17) with heads (18) are adapted so that their shafts (19) traverse the traversing holes (16) and screw into the corresponding threaded holes (15) in order to join together the vacuum pump (1) and the fixed structure (3) by pressing the flange (14) against the wall (2) of the fixed structure (3), **characterized in that** the traversing holes (16) comprise a distal segment (16a) in the shape of a right circular cylinder followed by an enlarged proximal segment (16b) in the shape of a right circular cylinder adjacent to the wall (2) of the fixed structure, and which, when shear force (20, 21) is applied in any lateral direction within the connection area between the vacuum pump (1) and the fixed structure (3), enables the screw's shaft (19) to bend and enables a corresponding lateral movement (D) between the traversing hole (16) and the corresponding threaded hole (15).

2. A device according to claim 1, **characterized in that** the traversing hole's (16) proximal segment (16b) shaped such that when the screw's shaft (19) bends to the point of abutting the side wall (16c) of the traversing hole's (16) proximal segment (16b), the lateral movement (D) that is possible between the traversing hole (16) and the corresponding threaded hole (15) is greater than the radius of the screw's shaft (19),
- the traversing hole's (16) proximal segment (16b) is of a length (Lb) greater than the length (La) of the traversing hole's (16) distal segment (16a),

3. A device according to one of the claims 1 or 2, **characterized in that** the traversing hole's (16) proximal segment (16b) includes a proximal portion (116b) in the shape of a right circular cylinder connecting to the traversing hole's (16) distal segment (16a) by a distal portion (216b) in the shape of a right circular cone's frustum.

4. A device according to claim 3, **characterized in that** the distal portion (216b) in the shape of a right circular cone's frustum has a half-cone angle equal to about 60°.

5. A device according to one of the claims 1 to 4, **characterized in that** the screw's shaft (19) comprises, adjacent to the head (18), a smooth shaft segment (19a) whose diameter (Dt) is much less than the diameter (Da) of the traversing hole's (16) distal segment (16a), and which is followed all the way to a free end (19c) by a threaded segment (19b) shaped to screw into the wall's (15) corresponding threaded hole (15).

6. A device according to claim 5, **characterized in that** the diameter (Dt) of the smooth shaft segment (19a) is less than or equal to 80% of the diameter (Da) of the traversing holes (16) distal segment (16a).

7. A device according to one of the claims 5 or 6, **characterized in that** the traversing hole's (16) proximal segment (16b) is of a length (Lb) greater than or equal to 1.5 times the length (La) of the traversing hole's (16) distal segment (16a).

8. A device according to one of the claims 1 to 7, **characterized in that** a washer (22) is placed between the screw's (17) head (18) and the adjacent outer surface (14a) of the flange (14).

9. A device according to one of the claims 1 to 8, **characterized in that** an elastomer-type shock-absorbing material is inserted into the space between the screw's shaft (19) and the flange's (14) corresponding traversing hole (16).

10. A vacuum pump (1) equipped with a fastening flange (14) with traversing holes (16) according to the device of claims 1 to 9.

## Patentansprüche

1. Vorrichtung für die Befestigung einer Vakuumpumpe (1) an einer Wand (2) einer festen Struktur (3), wobei ein koaxiater Ringflansch (14) auf dem Gehäuse (4) der Vakuumpumpe um die Ansaugöffnung (6) herum vorgesehen ist, Gewindebohrungen (15) an der Wand (2) der festen Struktur (3) vorgesehen sind, Durchgangsbohrungen (16) auf dem koaxialen Ringflansch (14) vorgesehen sind, und Schrauben (17) mit Kopf (18) so angepasst sind, dass ihre Schäfte (19) durch die Durchgangsbohrungen (16) geführt und in die zugehörigen Gewindebohrungen (15) geschraubt werden, um die Vakuumpumpe (1) fest mit der festen Struktur (3) zu verbinden, indem der Flansch (14) gegen die Wand (2) der festen Struktur (3) gepresst wird, **dadurch gekennzeichnet, dass** die Durchgangsbohrungen (16) einen distalen zylindrischen Rotationsabschnitt (16a), gefolgt von einem proximalen erweiterten koaxialen Rotationsabschnitt (16b), welcher an die Wand (2) der festen Struktur angrenzt, umfassen und bei Scherkräften (20, 21) in jeder seitlichen Richtung in oder Verbindungszone zwischen der Vakuumpumpe (1) und der festen Struktur (3) eine Biegung des Schraubenschafts (19) und eine entsprechende Seitenverschiebung (D) zwischen der Durchgangsbohrung (16) und der zugehörigen Gewindebohrung (15) ermöglichen.

2. Vorrichtung nach Anspruch 1, **dadurch gekennzeichnet dass** der proximale Abschnitt (16b) der Durchgangsbohrung (16) eine solche Form aufweist, dass bei der Biegung des Schraubenschafts (19) bis zum Anschlag gegen die Seitenwand (16c) des proximalen Abschnitts (16b) der Durchgangsbohrung (16) die mögliclie Seitenverschiebung (D) zwischen der Durchgangsbohrung (16) und der zugehörigen Gewindebohrung (15) größer ist als der Radius des Schraubenschafts (19),
- die Länge (Lb) des proximalen Abschnitts (16b) der Durchgangsbohrung (16) größer ist als die Länge (La) des distale Abschnitts (16a) der Durchgangsbohrung (16).

3. Vorrichtung nach einem der Anspruche 1 oder 2, **dadurch gekennzeichnet, dass** der proximale Abschnitt (16b) der Durchgangsbohrung (16) einen proximalen zylindrischen Rotationsabschnitt (116b) umfasst, weicher über einen distalen konischen Rotationsabschnitt (216b) mit dem distalen Abschnitt (16a) der Durchgangsbohrung (16) verbunden ist.

4. Vorrichtung nach Anspruch 3, **dadurch gekennzeichnet, dass** der distale konische Abschnitt (216b) einen Kegelhalbwinkel von annähernd 60° aufweist.

5. Vorrichtung nach einem beliebigen der Ansprüche 1 bis 4, **dadurch gekennzeichnet, dass** der Schaft (19) der Schraube, weicher an den Kopf (18) angrenzt, einen glatten Schaftabschnitt (19a) aufweist, dessen Durchmesser (Dt) bedeutend kleiner ist als der Durchmesser (Da) des distalen Abschnitts (16a) der Durchgangsbohrung (16), und auf welchen bis zu einem freien Ende (19c) ein Gewindeabschnitt (19b) folgt, welcher in die mit der Wand (2) assoziierte Gewindebohrung (15) geschraubt wird.

6. Vorrichtung nach Anspruch 5, **dadurch gekennzeichnet, dass** der Durchmesser (Dt) des glatten Schaftabschnitts (19a) kleiner als oder gleich 80% des Durchmessers (Da) des distalen Abschnitts (16a) der Durchgangsbohrung (16) ist.

7. Vorrichtung nach einem der Ansprüche 5 oder 6, **dadurch gekennzeichnet, dass** der proximale Abschnitt (16b) der Durchgangsbohrung (16) eine Länge (Lb) aufweist, die größer als oder gleich 1,5-mal die Länge (La) des distalen Abschnitts (16a) der Durchgangsbohrung (16) ist.

8. Vorrichtung nach einem beliebigen der Ansprüche 1 bis 7, **dadurch gekennzeichnet, dass** eine Unterlagscheibe (22) zwischen dem Kopf (18) der Schraube (17) und der angrenzenden Außenfläche (14a) des Flansches (14) abgeordnet ist.

9. Vorrichtung nach einem beliebigen der Anspruche 1 bis 8, **dadurch gekennzeichnet, dass** ein Dämpfungsmaterial vom Typ Elastomer in den Zwischenraum zwischen dem Schaft (19) der Schraube und der entsprechenden Durchgangsbohrung (16) des Flansches (14) eingelassen ist.

10. Vakuumpumpe (1), ausgestattet mit einem Befestigungsflansch (14) mit Durchgangsbohrungen (16) gemäß der Vorrichtung der Ansprüche, 1 bis 9.
